# EUROPÄISCHE PATENTSCHRIFT

(11) **EP 2 948 342 B1**
(45) Veröffentlichungstag und Bekanntmachung des Hinweises auf die Patenterteilung: **15.03.2017**
(21) Anmeldenummer: 14700963.3
(22) Anmeldetag: 20.01.2014
(51) Int. Cl.: B60Q 1/26, B60Q 1/24

(54) **KRAFTFAHRZEUG, UMFASSEND MEHRERE DER BELEUCHTUNG DES SEITLICHEN ODER RÜCKWÄRTIGEN FAHRZEUGUMFELDS DIENENDE LEUCHTMITTEL**
MOTOR VEHICLE COMPRISING A PLURALITY OF LAMPS SERVING TO ILLUMINATE THE AREA SURROUNDING THE VEHICLE TO THE SIDE OR REAR
VÉHICULE AUTOMOBILE, COMPRENANT PLUSIEURS MOYENS D'ÉCLAIRAGE SERVANT À ÉCLAIRER LES ZONES SITUÉES SUR LE CÔTÉ OU À L'ARRIÈRE DU VÉHICULE

(30) Priorität: 23.01.2013 DE 102013001086
(43) Veröffentlichungstag der Anmeldung: 02.12.2015
(73) Patentinhaber: Audi AG, 85045 Ingolstadt (DE)
(72) Erfinder: KOWATZKI, Stefan, 85134 Stammham (DE)
(74) Vertreter: Thielmann, Frank
(86) Internationale Anmeldenummer: PCT/EP2014/000136
(87) Internationale Veröffentlichungsnummer: WO 2014/114439

(56) Entgegenhaltungen:
- EP-A1- 2 384 936
- DE-A1- 19 805 771
- DE-A1-102005 041 261
- DE-A1-102006 033 883
- DE-A1-102007 039 677
- DE-A1-102010 034 927
- FR-A1- 2 929 193
- JP-A- 2009 057 014
- US-B2- 6 416 208

## Beschreibung

Die Erfindung betrifft ein Kraftfahrzeug, umfassend mehrere der Beleuchtung des seitlichen oder rückwärtigen Fahrzeugumfelds dienende Leuchtmittel.

Bei modernen Kraftfahrzeugen werden zunehmend Leuchtmittel eingesetzt, die der Ausleuchtung von Bereichen des Fahrzeugumfelds dienen, um einer Person, die einsteigen oder das Fahrzeug verlassen möchte, im Dunkeln eine bessere Sicht zu ermöglichen. Zu diesem Zweck sind an unterschiedlichen Stellen, beispielsweise im Türaußengriff oder im Außenspiegel entsprechende Leuchtmittel, zumeist LEDs, verbaut, die als "Vorfeldbeleuchtung" dienen. Diese Leuchtmittel werden üblicherweise beim Einsteigen oder Aussteigen aktiviert bzw. nach Ablauf einer bestimmten Zeit oder einem anderen Abbruchkriterium wieder deaktiviert. Bei bekannten Kraftfahrzeugen wird über diese Beleuchtungseinrichtung eine statisch definierte Fläche, also ein definierter Bodenbereich, ausgeleuchtet. Der Funktionstrigger, also der Trigger, der zur Aktivierung der Beleuchtung führt, ist zumeist das Entriegeln des verschlossenen Fahrzeugs über eine Funkfernbedienung, oder das Öffnen einer Tür beim Aussteigen. Die zusteigende Person oder die aussteigende Person nach Schließen der Tür kann infolge der Ausleuchtung die Gegebenheiten im Bereich des ausgeleuchteten Bereichs erkennen, jedoch auch nur dort, wobei diese statisch definierten Ausleuchtbereiche nicht allzu großflächig sind, sondern primär unmittelbar im Bereich der Seitentüren oder gegebenenfalls im Bereich der Heckklappe definiert sind.

Eine adaptiven Ausleuchtung von Bereichen eines Fahrzeugumfelds ist aus FR 2 929 193 A1 bekannt.

Der Erfindung liegt damit das Problem zugrunde, ein Kraftfahrzeug anzugeben, das eine verbesserte Ausleuchtung des Fahrzeugumfelds ermöglicht.

Zur Lösung dieses Problems ist ein Kraftfahrzeug gemäß Anspruch 1 vorgesehen, wobei ein oder mehrere Sensoren zur Erfassung der Position einer Person relativ zum Fahrzeug vorgesehen sind, und dass die Leuchtmittel, von denen im Bereich einer Fahrzeugseite oder des Fahrzeughecks mehrere verbaut sind und die unterschiedlichen Umfeldbereiche ausleuchten, separat in Abhängigkeit der erfassten Position ansteuerbar sind.

Erfindungsgemäß ist über die Sensoren die Möglichkeit gegeben, die Position einer Person, die sich dem Fahrzeug nähert oder sich vom Fahrzeug entfernt, zu erfassen. Anhand dieser Positionsinformation ist es nun möglich, über eine geeignete Steuerungseinrichtung wenigstens ein bestimmtes Leuchtmittel anzusteuern, wobei an jeder Fahrzeugseite respektive im Bereich des Fahrzeughecks jeweils mehrere, mindestens zwei separate Leuchtmittel verbaut sind. Die einer Seite oder dem Heckbereich zugeordneten Leuchtmittel leuchten die unterschiedlichen Bereiche aus. Ist nun die Position einer sich nähernden oder entfernenden Position bekannt, so kann beispielsweise das Leuchtmittel angesteuert werden, dessen Ausleuchtungsbereich in der Nähe der Position definiert ist. D. h., dass eine personenpositionsbezogene Ansteuerung des entsprechenden Leuchtmittels erfolgt, wobei jedes Leuchtmittel separat angesteuert werden kann. Da die Leuchtmittel unterschiedliche Bereiche ausleuchten, ist folglich keine statische Vorfeldbeleuchtung mehr gegeben, vielmehr ist das Vorfeld flexibel ausleuchtbar.

Bezüglich der Art der Ausleuchtung sind unterschiedliche Möglichkeiten denkbar. Gemäß einer ersten Erfindungsalternative kann die Position der Person kontinuierlich erfasst werden, wobei die Ansteuerung der Leuchtmittel in Abhängigkeit der kontinuierlich erfassten Position veränderbar ist. Gemäß dieser Erfindungsausgestaltung wird also die Vorfeld- oder Umfeldbeleuchtung "nachgeführt", sie variiert in Abhängigkeit der sich verändernden Position der Person. Nähert sich die Person beispielsweise dem Kraftfahrzeug und hat die Person per Funk das Fahrzeug entriegelt, so wird über den Sensor eine erste Positionsinformation erfasst, woraufhin ein erstes Leuchtmittel angesteuert wird, das einen weiter entfernt liegenden Bereich ausleuchtet. Dieser ist für die Person einsehbar. Mit zunehmender Annäherung und damit Positionsänderung, die kontinuierlich erfasst wird, wird ein zweites Leuchtmittel angesteuert, das wiederum besser relativ zur neuen Position der Person ausleuchtet etc. D. h., dass die Umfeldausleuchtung der Person respektive dem Laufweg der Person folgt, wobei dieses "Verfolgen" natürlich umso variabler ist, je mehr Leuchtmittel verbaut sind.

Eine alternative Ansteuerungsweise sieht vor, die Leuchtmittel nach einmaliger Erfassung der Position der Person nach einer definierten zeitlichen Abfolge anzusteuern. Hierüber wird quasi ein "Lauflicht" realisiert, wobei sich die Ansteuerabfolge solange wiederholt, bis die Person entweder im Fahrzeug Platz genommen hat oder, wiederum über den Sensor erfasst, weit genug vom Fahrzeug entfernt ist. Die sich nähernde Person wird also auch hier über den Sensor erfasst. Wird ein hinreichender Mindestabstand der Person zum Fahrzeug detektiert, so schaltet die Steuerungseinrichtung das erste Leuchtmittel an. Nach Ablauf einer gewissen Zeit, beispielsweise 1 - 3 Sekunden, wird automatisch das zweite Leuchtmittel angeschaltet, wonach, wiederum nach Ablauf einer definierten Zeit von beispielsweise 1 - 3 Sekunden, ein drittes Leuchtmittel angesteuert wird, wonach wiederum das erste Leuchtmittel angesteuert wird etc. Es ergibt sich auf diese Weise also ein "Lauflicht", d. h., dass unterschiedliche Umfeldbereiche, die aufgrund der Ausrichtung der Leuchtmittel benachbart zueinander liegen oder einander teilweise überlappen, nacheinander angesteuert werden. Bevorzugt wird ein zuvor angesteuertes Leuchtmittel stets ausgeschaltet, wenn ein danach anzusteuerndes Leuchtmittel zugeschaltet wird. Auch hierüber kann die Person, die sich beispielsweise dem Fahrzeug nähert, den vor ihm liegenden Umfeldbereich großflächig einsehen. Etwaige Hindernisse etc. können ohne Weiteres erkannt werden.

Die Leuchtmittel selbst können in einem Seitenspiegel und/oder einem Türgriff und/oder an der Heckklappe verbaut sein, wobei pro Seite respektive im Bereich des Hecks mindestens zwei Leuchtmittel, gegebenenfalls auch drei oder vier verbaut sein können, und wobei die jeweiligen seitenbezogenen Leuchtmittel unterschiedliche Umfeldbereich ausleuchten. Denkbar ist es, beispielsweise drei Leuchtmittel im Rückspiegel zu verbauen, also als Leuchtmodul auszuführen, wobei die einzelnen Leuchtmittel unterschiedlich ausgerichtet sind. Das erste Leuchtmittel leuchtet einen weit entfernt liegenden Bodenbereich aus, das zweite Leuchtmittel einen anschließenden, näher liegenden Bodenbereich und das dritte Leuchtmittel einen wiederum anschließenden, jedoch unmittelbar vor der Seitentür oder dergleichen befindlichen Bodenbereich.

Der jeweilige Sensor, der einer Fahrzeugseite respektive dem Fahrzeugheck zugeordnet ist, ist dort zweckmäßigerweise so verbaut, dass er ein möglichst großes Erfassungsfeld hat. Möglich ist es auch hier, den Sensor im Seitenspiegel, einem Türgriff oder der Heckklappe zu verbauen, gegebenenfalls benachbart respektive auf einem gemeinsamen Modul mit einem oder mehreren der dortseits verbauten Leuchtmittel.

Als Leuchtmittel kommen zweckmäßigerweise LEDs zum Einsatz, die einerseits sehr kleinbauend sind und somit ohne Weiteres an den angegebenen Positionen verbaut werden können, und auch ohne Weiteres zu mehreren in einem gemeinsamen Modul integriert werden können, und die andererseits eine hohe Leuchtkraft besitzen, mithin also den jeweiligen Bereich hinreichend hell ausleuchten können.

Im Bereich einer Fahrzeugseite oder des Fahrzeughecks sind erfindungsgemäß wenigstens drei Leuchtmittel verbaut die separat in Abhängigkeit der erfassten Position ansteuerbar sind und unterschiedliche, benachbart zueinander liegende oder einander teilweise überlappende Umfeldbereiche ausleuchten. Dabei können die Leuchtmittel Umfeldbereiche ausleuchten, die in unterschiedlicher Entfernung von dem Kraftfahrzeug liegen. Erfindungsgemäß sind ein erstes, ein zweites und ein drittes Leuchtmittel vorgesehen wobei das erste Leuchtmittel einen weit vom Kraftfahrzeug entfernt liegenden ersten Umfeldbereich, das zweite Leuchtmittel einen an den ersten Umfeldbereich anschließenden näher am Kraftfahrzeug liegenden zweiten Umfeldbereich und das dritte Leuchtmittel einen an den zweiten Umfeldbereich anschließenden, zum Kraftfahrzeug benachbarten dritten Umfeldbereich ausleuchtet.

Weitere Vorteile, Merkmale und Einzelheiten der Erfindung ergeben sich aus dem im Folgenden beschriebenen Ausführungsbeispiel sowie anhand der Zeichnungen. Dabei zeigen:
- Fig. 1: eine Prinzipdarstellung eines erfindungsgemäßen Kraftfahrzeugs, und
- Fig. 2: eine Prinzipdarstellung der wesentlichen Komponenten der erfindungsgemäßen Umfeldbeleuchtung.

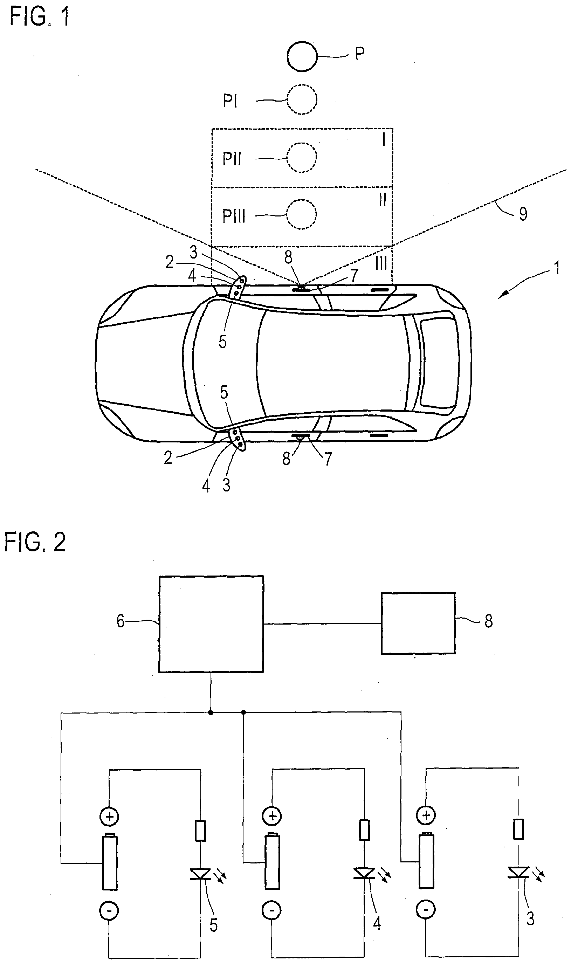

Fig. 1 zeigt ein erfindungsgemäßes Kraftfahrzeug 1, bei dem eine Umfeldbeleuchtung verbaut ist, die auf dynamische Weise eine Ausleuchtung des fahrzeugnahen Umfelds ermöglicht. Im gezeigten Ausführungsbeispiel sind an jeder Fahrzeugseite im jeweiligen Seitenspiegel 2 mehrere einzelne Leuchtmittel 3, 4, 5 verbaut, bei denen es sich jeweils um einzelne LEDs handelt, die separat ansteuerbar sind, d. h., dass jedes einzelne Leuchtmittel individuell und einzeln betrieben werden kann. Die Leuchtmittel 3, 4, 5 sind beispielsweise als gemeinsames Leuchtmittelmodul auf einem gemeinsamen Träger angeordnet und als einteilige Baueinheit im jeweiligen Seitenspiegel 2 verbaut. Sie befinden sich an der Spiegelunterseite, in Fig. 1 sind sie lediglich exemplarisch im Seitenspiegel 2 eingezeichnet.

Die Ansteuerung der einzelnen Leuchtmittel 3, 4, 5 erfolgt über eine gemeinsame Steuerungseinrichtung 6, die entweder nur einem Leuchtmittelmodul, also den Leuchtmitteln nur einer Fahrzeugseite zugeordnet ist, die aber auch beide Leuchtmittelmodule an den unterschiedlichen Fahrzeugseiten ansteuern kann. Wie der Prinzipdarstellung gemäß Fig. 2 zu entnehmen ist, wird über die Steuerungseinrichtung 6 die Stromversorgung der einzelnen Leuchtmittel zugeschaltet oder abgeschaltet, wobei selbstverständlich die jeweilige Schaltung zweckentsprechend ausgelegt wird.

An jeder Fahrzeugseite ist ferner im jeweiligen Seitengriff 7 ein Positionssensor 8 verbaut, der der Erfassung der Position einer sich in seinem Erfassungsfeld, das über die gestrichelte Linie 9 exemplarisch in Fig. 1 gezeigt ist, befindlichen Person P dient. Dieser Positionssensor 8 kommuniziert mit der Steuerungseinrichtung 6, liefert ihr also seine Erfassungsinformation, wobei die Steuerungseinrichtung 6 beispielsweise hieraus entsprechende Positionsinformationen ableitet, sofern dies nicht bereits sensorseitig erfolgt.

Anhand Fig. 1 ist exemplarisch die Betriebsweise des erfindungsgemäßen Kraftfahrzeugs bei Annährung der Person P gezeigt. Wie durch das ausgezogene, mit P dargestellte Symbol angedeutet ist, befindet sich die Person dort zwar im Erfassungsbereich des Positionssensor 9, sie ist jedoch noch zu weit entfernt zum Kraftfahrzeug, um eines der Leuchtmittel 3, 4, 5 anzusteuern, also das Fahrzeugumfeld benachbart zur Fahrzeugseite auszuleuchten. Die Person P nähert sich nun dem Kraftfahrzeug 1. Sobald die Person die mit PI gekennzeichnete Position erreicht hat, wird dies als Erfassungsergebnis des Positionssensors 8 an die Steuerungseinrichtung 6 gegeben. Hier befindet sich die Person in einer Relativposition zum Kraftfahrzeug, die eine erste Ausleuchtung erfordert. Zu diesem Zweck steuert die Steuerungseinrichtung 6 das Leuchtmittel 3, also die entsprechende LED an, die so ausgerichtet am Modul respektive im Seitenspiegel 3 verbaut ist, dass sie den mit I exemplarisch gekennzeichneten Bodenbereich ausleuchtet. Dieser Bodenbereich liegt vor der Person, so dass diese den unmittelbaren weiteren Weg gut einsehen kann.

Der Positionssensor 8 erfasst kontinuierlich die Position der Person P, die sich angenommenermaßen weiter dem Fahrzeug nähert. Befindet sich die Person in der Position PII, so wird auch dies umgehend der Steuerungseinrichtung 6 mitgeteilt, die daraufhin die Notwendigkeit einer Änderung der Umfeldausleuchtung erkennt und das Leuchtmittel 4 ansteuert, so dass dieses leuchtet, während das Leuchtmittel 3 deaktiviert wird. Das Leuchtmittel 4, also die entsprechende LED, ist in einem etwas anderen Winkel respektive in einer anderen Position ausgerichtet, verglichen mit dem Leuchtmittel 3, so dass über das Leuchtmittel 4 der mit II gekennzeichnete Bodenbereich ausgeleuchtet wird, der dann wiederum vor der in der Position PII befindlichen Person liegt.

Bewegt sich die Person nun weiter aufs Kraftfahrzeug 1 zu, so gelangt sie zur mit PIII gekennzeichneten Position, die wiederum vom Positionssensor 8 erfasst und der Steuerungseinrichtung 6 mitgeteilt wird. Diese deaktiviert daraufhin das Leuchtmittel 4 und schaltet simultan das Leuchtmittel 5, also die entsprechende LED, zu, die wiederum etwas anders ausgerichtet verbaut ist. Mit dem Leuchtmittel 5 kann der unmittelbar benachbart zum Fahrzeug befindliche, mit III gekennzeichnete Bodenbereich ausgeleuchtet werden, so dass nunmehr dieser von der Person eingesehen werden kann. Sobald die Person dann das Kraftfahrzeug, das sie zuvor bereits beispielsweise über einen Funksender entriegelt hat oder das von einer anderen Person entriegelt wurde, durch Öffnen der Seitentür öffnet, erlischt beispielsweise das zuvor betriebene Leuchtmittel 5, so dass die Umfeldbeleuchtung beendet ist. Sie wird auch nicht mehr benötigt, nachdem die Person in Begriff ist einzusteigen.

Ersichtlich lässt also die erfindungsgemäße dynamische Zu- und Abschaltung einzelner Leuchtmittel eine dynamische Vorfeld- oder Umfeldbeleuchtung zu, die in Bezug auf die Position einer Person respektive deren Positionsänderung ausgerichtet ist, so dass das Umfeld positionsbezogen stets optimal ausgeleuchtet ist und auch eine Ausleuchtung in entfernten Bereichen möglich ist.

In entsprechend umgekehrter Weise würde der Ausleuchtvorgang erfolgen, wenn eine Position das Kraftfahrzeug verlässt. Nach Aussteigen und Schließen der Fahrzeugtür würde über den Positionssensor 8 also wiederum die Position der Person unmittelbar am Fahrzeug erkannt, woraufhin zunächst das Leuchtmittel 5 zugeschaltet wird, wenn dieses nicht ohnehin allein durch das Öffnen der Tür aktiviert wird. Bewegt sich die Person unter kontinuierlicher Positionserfassung vom Fahrzeug weg, so wird, je nach erfasster Position, nachfolgend das Leuchtmittel 4 zugeschaltet und das Leuchtmittel 5 deaktiviert und schließlich das Leuchtmittel 3 zugeschaltet und das Leuchtmittel 4 deaktiviert. Sobald die Person sodann hinreichend weit entfernt vom Fahrzeug ist, wird auch das Leuchtmittel 3 wieder deaktiviert.

Die zuvor beschriebenen Beispielfälle ermöglichen eine dynamische Umfeldbeleuchtung unter kontinuierlicher Positionserfassung der sich verändernden Personenposition. Denkbar ist es aber auch, die Ausleuchtung dynamisch vorzunehmen, jedoch ohne kontinuierliche Positionserfassung. Nähert sich, ausgehend vom Beispielsfall gemäß Fig. 1, die Person dem Kraftfahrzeug, so wird beispielsweise mit Erfassen der mit PI gekennzeichneten Personenposition das Leuchtmittel 5 zugeschaltet. Es leuchtet für eine vorbestimmte Zeit, beispielsweise zwei Sekunden, woraufhin es deaktiviert und das Leuchtmittel 4 zugeschaltet wird, das seinerseits für beispielsweise zwei Sekunden leuchtet, woraufhin es deaktiviert wird und das Leuchtmittel 3 zugeschaltet wird, das wiederum für beispielsweise zwei Sekunden leuchtet, woraufhin es deaktiviert und wieder das Leuchtmittel 3 zugeschaltet wird etc. D. h., dass eine definierte zeitliche Abfolge seitens der Steuerungseinrichtung 6 abgearbeitet wird, mithin also die einzelnen Leuchtmittel alternierend zugeschaltet und deaktiviert werden. Hierüber wird ein Lauflicht erzeugt, d. h., das der vor der Person liegende Weg nach Art eines Lauflichts ausgeleuchtet wird.

In entsprechender Weise kann natürlich auch hier beim Aussteigen verfahren werden, wobei in diesem Fall dann zunächst mit dem Leuchtmittel 5 begonnen wird.

Wenngleich im gezeigten Ausführungsbeispiel alle drei Leuchtmittel 3, 4, 5 an einem Seitenspiegel verbaut sind, wäre es selbstverständlich denkbar, die Leuchtmittel auch in anderer Verteilung im Bereich einer Fahrzeugseite zu positionieren. Grundlegend ist jedoch, dass jedem Leuchtmittel ein anderer Ausleuchtbereich zugeordnet ist.

## Patentansprüche

1. Kraftfahrzeug, umfassend mehrere der Beleuchtung des seitlichen oder rückwärtigen Fahrzeugumfelds dienende Leuchtmittel, wobei ein oder mehrere Sensoren (8) zur Erfassung der Position einer Person (P) relativ zum Fahrzeug (1) vorgesehen sind, wobei im Bereich einer Fahrzeugseite oder des Fahrzeughecks wenigstens ein erstes, ein zweites und ein drittes Leuchtmittel (3, 4, 5) verbaut sind, die separat in Abhängigkeit der erfassten Position ansteuerbar sind und unterschiedliche benachbart zueinander liegende oder einander teilweise überlappende Umfeldbereiche (I, II, III) ausleuchten, **dadurch gekennzeichnet, dass** das erste Leuchtmittel (3) einen weit vom Kraftfahrzeug (1) entfernt liegenden ersten Umfeldbereich (I), das zweite Leuchtmittel (4) einen an den ersten Umfeldbereich (I) anschließenden näher am Kraftfahrzeug (1) liegenden zweiten Umfeldbereich (II) und das dritte Leuchtmittel (5) einen an den zweiten Umfeldbereich (II) anschließenden zum Kraftfahrzeug (1) benachbarten dritten Umfeldbereich (III) ausleuchtet.

2. Kraftfahrzeug nach Anspruch 1,
**dadurch gekennzeichnet,**
**dass** die Position der Person (P) kontinuierlich erfasst wird und die Ansteuerung der Leuchtmittel (3, 4, 5) in Abhängigkeit der kontinuierlich erfassten Position veränderbar ist.

3. Kraftfahrzeug nach Anspruch 1,
**dadurch gekennzeichnet,**
**dass** die Leuchtmittel (3, 4, 5) nach einmaliger Erfassung der Position der Person (P) nach einer definierten zeitlichen Abfolge ansteuerbar sind.

4. Kraftfahrzeug nach einem der Ansprüche 1 - 3,
**dadurch gekennzeichnet,**
**dass** die Leuchtmittel (3, 4, 5) in einem Seitenspiegel (2) und/oder einem Türgriff (7) und/oder an der Heckklappe verbaut sind.

5. Kraftfahrzeug nach einem der vorangehenden Ansprüche,
**dadurch gekennzeichnet,**
**dass** der Sensor (8), gegebenenfalls gemeinsam mit den mehreren Leuchtmitteln (3, 4, 5), in einem Seitenspiegel (2) und/oder einem Türgriff (7) und/oder der Heckklappe verbaut ist.

6. Kraftfahrzeug nach einem der vorangehenden Ansprüche,
**dadurch gekennzeichnet,**
**dass** als Leuchtmittel (3, 4, 5) LEDs vorgesehen sind.

## Claims

1. Motor vehicle comprising a plurality of illumination means which serve to illuminate the lateral or rear vehicle environment, wherein one or more sensors (8) is/are provided for detecting the position of a person (P) relative to the vehicle (1),
wherein
there are installed in the region of a vehicle side or the vehicle rear at least a first, a second and a third illumination means (3, 4, 5) which can be controlled separately in accordance with the detected position and which illuminate different environment regions (I, II, III) which are located adjoining each other or which partially overlap each other, **characterised in that** the first illumination means (3) illuminates a first environment region (I) which is located far away from the motor vehicle (1), the second illumination means (4) illuminates a second environment region (II) which is adjoining the first environment region (I) and which is closer to the motor vehicle (1) and the third illumination means (5) illuminates a third environment region (III) which is adjoining the second environment region (II) and which is adjacent to the motor vehicle (1).

2. Motor vehicle according to claim 1,
**characterised in that**
the position of the person (P) is continuously detected and the control of the illumination means (3, 4, 5) can be changed in accordance with the position which is continuously detected.

3. Motor vehicle according to claim 1,
**characterised in that**
the illumination means (3, 4, 5) after detecting the position of the person (P) once can be controlled in accordance with a defined time sequence.

4. Motor vehicle according to any one of claims 1 to 3,
**characterised in that**
the illumination means (3, 4, 5) are installed in a side mirror (2) and/or a door handle (7) and/or on the rear hatch.

5. Motor vehicle according to any one of the preceding claims,
**characterised in that**
the sensor (8) is installed, where applicable together with the plurality of illumination means (3, 4, 5), in a side mirror (2) and/or a door handle (7) and/or the rear hatch.

6. Motor vehicle according to any one of the preceding claims,
**characterised in that**
LEDs are provided as the illumination means (3, 4, 5).

## Revendications

1. Véhicule automobile, comprenant plusieurs moyens d'éclairage servant à éclairer l'environnement latéral ou arrière du véhicule, un ou plusieurs capteurs (8) étant prévus pour détecter la position d'une personne (P) par rapport au véhicule (1), au moins un premier, un deuxième et un troisième moyen d'éclairage (3, 4, 5) étant installés dans la zone d'un côté de véhicule ou de l'arrière de véhicule, lesquels moyens d'éclairage peuvent être commandés séparément en fonction de la position détectée et illuminent différentes zones d'environnement (I, II, III) situées de manière adjacente les unes par rapport aux autres ou se chevauchant les unes les autres en partie,
**caractérisé en ce que**
le premier moyen d'éclairage (3) illumine une première zone d'environnement (I) éloignée du véhicule automobile (1), le deuxième moyen d'éclairage (4) illumine une deuxième zone d'environnement (II) située dans le prolongement de la première zone d'environnement (I) et plus proche du véhicule automobile (1) et le troisième moyen d'éclairage (5) illumine une troisième zone d'environnement (III) située dans le prolongement de la deuxième zone d'environnement (II) et adjacente par rapport au véhicule automobile (1).

2. Véhicule automobile selon la revendication 1,
**caractérisé en ce**
**que** la position de la personne (P) est détectée en continu, et la commande des moyens d'éclairage (3, 4, 5) peut être modifiée en fonction de la position détectée en continu.

3. Véhicule automobile selon la revendication 1,
**caractérisé en ce que** les moyens d'éclairage (3, 4, 5) peuvent être commandés selon une séquence temporelle définie après une unique détection de la position de la personne (P).

4. Véhicule automobile selon l'une quelconque des revendications 1 à 3,
**caractérisé en ce**
**que** les moyens d'éclairage (3, 4, 5) sont installés dans un rétroviseur latéral (2) et/ou dans une poignée de porte (7) et/ou au niveau du hayon.

5. Véhicule automobile selon l'une quelconque des revendications précédentes,
**caractérisé en ce**
**que** le capteur (8) est installé, le cas échéant conjointement avec de nombreux moyens d'éclairage (3, 4, 5), dans un rétroviseur latéral (2) et/ou dans une poignée de porte (7) et/ou dans le hayon.

6. Véhicule automobile selon l'une quelconque des revendications précédentes,
**caractérisé en ce**
**que** des LED sont prévues comme moyens d'éclairage (3, 4, 5).
